# EUROPEAN PATENT SPECIFICATION

(11) **EP 2 124 601 B1**
(45) Date of publication and mention of the grant of the patent: **11.07.2012**
(21) Application number: 07833688.0
(22) Date of filing: 30.10.2007
(51) Int. Cl.: A23G 4/20, A23G 4/08

(54) **CENTER-FILLED COATED GUM AND A METHOD OF ITS PREPARATION**
GEFÜLLTER UND ÜBERZOGENER KAUGUMMI, SOWIE VERFAHREN ZU SEINER HERSTELLUNG
CHEWING-GUM REVÊTU ET FOURRÉ ET SON PROCÉDÉ DE PRÉPARATION

(30) Priority: 06.02.2007 KR 20070012081
(43) Date of publication of application: 02.12.2009
(73) Proprietor: LOTTE CONFECTIONERY CO., Ltd., Seoul 150-964 (KR)
(72) Inventor: JEON, Jin Kyung, Seoul 158-755 (KR); PARK, Chi Geol, Anyang-si Gyeonggi-do431-080 (KR); LEE, Man Chong, Suwon-si Gyeonggi-do 441-390 (KR); KIM, Yong Tack, Seoul 157-030 (KR)
(74) Representative: Jackson, Richard Eric
(86) International application number: PCT/KR2007/005380
(87) International publication number: WO 2008/096945

(56) References cited:
- WO-A1-2006/079338
- WO-A1-2008/030274
- WO-A2-2005/063038
- WO-A2-2007/100721
- KR-A- 19980 025 533
- KR-A- 20020 016 166
- KR-A- 20030 030 048
- US-A- 4 513 012
- US-A1- 2006 286 201
- US-B1- 6 280 780
- FAIRS I: "Formulating confectionery with xylitol" MANUFACTURING CONFECTIONER, MANUFACTURING CONFECTIONER PUBLISHING COMPANY, US, vol. 85, no. 10, 1 January 2005 (2005-01-01), pages 39-42, XP009138185 ISSN: 0025-2573
- GNPD/ Mintel: "Sugar-free chewing gum" 1 December 2006 (2006-12-01), pages 1-2, XP002599138 Retrieved from the Internet: URL:http://www.gnpd.com/sinatra/gnpd/searc h_results/&s_sort=2&item_id=620980 [retrieved on 2010-08-31]

## Description

### [Technical Field]

The present invention relates to a center-filled coated chewing gum giving a feeling of refreshment and a preparation process thereof.

### [Background Art]

The conventional chewing gum is prepared by completely mixing sugar and sugar alcohols or other sweetener as a main ingredient along with small amount of other food or food additives such as a gum base, an emulsifying agent, a softening agent and a flavor in a pre-heated mixer, and performing extrusion, rolling and aging for 24-28 hours, followed by cutting and packing processes. The conventional center-filled gum is prepared by filling a sweetener, an organic acid and a flavor into the center of the chewing gum after mixing the aforementioned materials, followed by processes of molding and aging for 24-48 hours.

Further, WO 2006/026298 discloses a center-filled chewing gum, whose center is filled with a liquid-phase material. U.S. patent No. 4,513,012 discloses a center-filled chewing gum, a center of which is filled with powder-phase material. Other center-filled chewing gums disclosed are prepared by filling a sweetener and an organic acid and a flavor in the center of the chewing gum.

These conventional gums are prepared by using a crystalline material to facilitate the filling the center of the chewing gum, optionally in combination with L-menthol to increase a feeling of refreshment. However, the crystalline material decreases the touch inside the mouth and preference, and the use of L-menthol is also very limited because of its peculiar flavor and bitterness when used in large amount.

Although sugar alcohols with latent heat such as sorbitol and xylitol have also been used, they show a relatively high hydroscopic property and causes serious problems during the manufacture of chewing gums.

Further, the conventional chewing gums comprise either a center-filled or a coating layer, and the characteristics of both gums could have been tasted by chewing each of the gums separately.

US 2006/286201 discloses multi-modality center-filled chewing gum. The individual gum pieces, which include the compositions of the present invention, may include a center-fill region surrounded by a gum region. The gum region may include a gum base. The individual gum pieces optionally may be further coated with an external coating layer. At least two components that create a duality, such as two functional agents, may be incorporated into different regions of the gum.

WO 2006/079338 discloses a chewing gum piece comprising at least one inner filling being enclosed by sugarless chewing gum substance, the chewing gum piece being provided with an anti-sticking agent and a coating at least partly encapsulating the chewing gum piece and anti-sticking agent.

### [Disclosure]

### [Technical Problem]

The present inventors have exerted extensive researches to overcome the aforementioned problems and also to develop a chewing gum giving both a feeling of refreshment and a feeling of crunch. As a result, the present invention is finally completed based on the findings that a feeling of refreshment may be maximized by preparing a composition for filling a center with granules with a predetermined diameter, and that the composition for filling a center does not sink into the gum base layer and a feeling of crunch may be appropriately achieved by limiting the range of temperature and humidity when forming a coating layer onto the outer surface of the gum base layer.

Therefore, the present invention aims to provide a center-filled chewing gum, which is filled with a granule-phase with a predetermined diameter composition for filling the center and comprises a coating layer.

Further, the present invention also aims to provide a process of preparing a chewing gum, where the range of temperature and humidity is limited when forming a coating layer onto the outer surface of the gum base layer.

### [Technical Solution]

The present invention relates to a center-filled coated chewing gum as defined in claim 1.

Further, the present invention also relates to a process of preparing center-filled coated chewing gum as defined in claim 6.

Hereunder is provided a detailed description of the present invention.

The present invention relates to a chewing gum comprising a center layer filled with granules with a predetermined size, a gum base layer surrounding the center layer and a coating layer surrounding the outer surface of the gum base layer, thereby enabling to prevent the ingredients of the center layer from being sunk into the gum base layer by limiting the temperature and humidity range when applying coating onto the gum base layer surrounding the center layer, and also to provide a superior feeling of refreshment and crunch as compared to the conventional chewing gum comprising a powder-phase center layer, and a preparation method thereof.

Hereunder is provided a detailed description of a center-filled coated chewing gum according to the present invention.

A center-filled coated chewing gum herein comprises granule-phase center layer, a gum base layer surrounding the center layer and a coating layer surrounding the outer surface of the gum base layer.

The center-filled coated chewing gum may comprise 5.0-30.0 wt% preferably 10-25 wt% of a center layer, 30.0-80.0 wt% preferably 55-70 wt% of a gum base layer and 10.0-40.0 wt% preferably 10-30 wt% of a coating layer.

When the content of the center layer is less than 5.0 wt%, a feeling of refreshment may not be sufficient. When the content is higher than 30.0 wt%, the gum may become soft and the center layer may easily flow out during the coating process due to a relatively high amount of sugar alcohol.

When the content of the gum base layer is less than 30.0 wt%, it may not function as a gum. When the content is higher than 80.0 wt%, a feeling of refreshment may not be satisfactory due to insufficient filling of the center layer.

When the content of the coating layer is less than 10.0 wt%,
a feeling of crunch, a characteristic of coating, may decrease. When the content is higher than 40.0 wt%, the sense of touch during chewing may not be satisfiable due to the relatively thick coating layer.

The gum base layer may comprise 15-50 wt% of a gum base, 45-80 wt% of a sugar alcohol and sweetener and 0.1-5.0 wt% of a flavor. Any conventional gum base may be used in the present invention. In particular, polyvinyl acetate with a high degree of polymerization is preferred in the sense that a center layer does not easily sink into the gum base.

Examples of the sugar alcohol include xylitol, maltitol, sorbitol, erythritol, isomalt, lactitol, mannitol and a mixture thereof. Examples of the sweetener include sugar, glucose, starch syrup and a mixture thereof.

The center layer comprises 60-99 wt% of xylitol, 0-5.0 wt% of a cooling agent, 0.1-25 wt% of water, 0-5.0 wt% of menthol and 0-5.0 wt% of a flavor. The cooling agent is selected from monomenthyl succinate, L-menthyllactate and menthol carboxamide. Flavor may be selected to taste.

The center layer comprises granule-phase. The granule-phase center layer has a diameter of 980µm-1900µm (10-18 mesh), preferably 1150µm-1520µm (12-16 mesh). When the size of the granules is larger than 1900µm (mesh size of the granules is lower than 10 mesh) a feeling of refreshment may not be satisfactory due to insufficiency in filling. When the size of the granules is lower than 980µm (mesh size is larger than 18 mesh), a feeling of refreshment may not be satisfactory due to the small particle size of the granules.

The coating layer comprises 60-95 wt% of sugar alcohol, 0.1-5.0 wt% of a binding agent, 1.0-30, wt% of water and 0.1-5.0 wt% of a flavor. The sugar alcohol is xylitol. Examples the binding agent include gums, preferably Arabic gum, and gelatin.

Hereunder is provided a detailed description of each step of a process according to the present invention.

In a step, a mixture is obtained by mixing a gum base layer composition comprising a gum base, a sweetener and a sugar alcohol in a mixer pre-heated at 45-55 °C, adding a flavor in the composition and further mixing a mixture comprising the composition and the flavor.

The flavor is added later to prevent the photo-decomposition of the flavor. In particular, when polyvinyl acetate with a relatively high degree of polymerization is used as a gum base, the flowing-out of a center layer may be decreased during the coating process, thus increasing the quality of goods.

In another step, a molded gum is obtained by extruding the mixture with an extruder, hoppering granule-phase xylitol composition through a hopper with a screw, whereby enabling the filling of the center and the molding; and,

In particular, liquid nitrogen (-196 °C) is preferred to be used to prevent the adhesion of the gum to the mold.

In still another step, the molded gum is coated with a coating layer composition under the conditions of 18-25 °C and 40-50% RH, followed by aging.

A center-filled coated chewing gum herein is superior to the conventional chewing gum comprising a powder-phase center layer in both a feeling of refreshment and a feeling of crunch.

Further, the sinking of ingredients contained in a center layer into a gum base layer is prevented in the present invention by improving the conditions, i.e. by limiting the temperature range to 18-25 °C and the humidity range to 40-50% RH when applying the coating onto the gum base layer surrounding the center layer.

### [Advantageous Effects]

As described above, the present invention provides a chewing gum giving both a feeling of refreshment and a feeling of crunch.

### [Mode for Invention]

The present invention is described more specifically by the following Examples. Examples herein are meant only to illustrate the present invention, but in no way to limit the claimed invention.

### Example 1

### Preparatory Example 1: Preparation of gum base mass

Gum base mass was prepared by using a predetermined amount of ingredients as shown in Table 1. Ingredients except flavor were completely mixed in a mixer, which was preheated at 45-55 °C, for about 30 minutes, followed by cooling. The cooled mixture was added with flavor, thus providing gum base mass.

**[Table 1]**

| | | | Content (wt%) | | | |
|---|---|---|---|---|---|---|
| | | | Specimen 1 | Specimen 2 | Specimen 3 | Specimen 4 |
| Ingredient | Gum base¹⁾ | | 32 | 32 | 32 | 27 |
| | Sugar | Xylitol | 66 | 36 | - | - |
| | alcohol | Maltitol | - | 30 | - | - |
| | | Sorbitol | - | - | 0 | - |
| | | Erythritol | - | - | 36 | - |
| | | Isomalt | - | - | 10 | - |
| | | Lactitol | - | - | 5 | - |
| | | Mannitol | - | - | 5 | - |
| | Sweetener | Sugar | - | - | - | 55 |
| | | Starch syrup | - | - | - | 7 |
| | | Glucose | - | - | - | 8 |
| | Emulsifying agent²⁾ | | 0.5 | 0.5 | 0.5 | 0.5 |
| | Flavor³⁾ | | 1.5 | 1.5 | 1.5 | 1.5 |
| | Coloring agent⁴⁾ | | - | - | - | 0.5 |
| | Liquid-phase sorbitol | | - | - | - | 0.5 |
| Total | | | 100 | 100 | 100 | 100 |
| 1) Cultor, Roquette | | | | | | |
| 2) Mitsubishi | | | | | | |
| 3) Fruit flavor, Mint flavor | | | | | | |
| 4) Lotteshopping Co. Ltd., MSC | | | | | | |

### Preparatory Example 2. Preparation of granules for filling center

Menthol was mixed with a cooling agent by using a predetermined amount of ingredients as shown in Table 2 The mixture was mixed with xylitol for 20 minutes in a granule mixer, while adding water. Granules were prepared by passing the mixture through a granulator (1520 µm) (12 mesh), followed by drying at room temperature for 24 hours, thus obtaining granules for filling a center. Average diameter of the granules is presented in Table 3.

**[Table 2]**

| | | Content (wt%) | | | | |
|---|---|---|---|---|---|---|
| | | Specimen 8 | Specimen 9 | Specimen 10 | Specimen 11 | Specimen 12 |
| Ingredients | Xylitol | 95 | 95 | 96 | 96 | 95 |
| | Cooling agent¹⁾ | 0.5 | 1 | 1 | 1 | 0.5 |
| | Menthol | 2.5 | 1.5 | 1 | 1 | 0.5 |

| | Water | 2 | 1.5 | 1 | 1 | 2 |
|---|---|---|---|---|---|---|
| | Powder flavor | - | .0 | 1 | 1 | 2 |
| Total | | 100 | 100 | 100 | 100 | 100 |
| Diameter µm (mesh) | | 2460 (8) | 1900 (10) | 1150 (16) | 1150 (16) | 950 (18) |
| 1) Symrise, Givaudan, Firmenich | | | | | | |

### Preparatory Example 3 Preparation of composition for coating

Arabic gum was dissolved in a double boiler by using a predetermined amount 3 of ingredients as shown in Table 3. The Arabic gum was mixed with xylitol and water in a syrup mixer until completely dissolved, thus obtaining a composition for coating.

**[Table 3]**

| | | | Content (wt%) | | | |
|---|---|---|---|---|---|---|
| | | | Specimen 13 | Specimen 14 Reference Specimen | Specimen 15 | Specimen 16 Reference Specimen |
| Ingredients | agar alcohol | | | | | |
| | | | - | | | |
| | | rbitol | - | - | - | - |
| | | Erythritol | Erythritol | - | - | - |
| | | Isomalt | - | - | - | 66.5 |
| | | Lactitol | - | - | - | - |
| | | Mannitol | - | - | - | - |
| | Binding agent | Arabic gum | 4.1 | 3.6 | 1.7 | 3.5 |
| | | Gelatin | - | - | 2.3 | - |
| | Water | | 27.3 | 35.5 | 27.4 | 30 |
| Total | | | 100 | 100 | 100 | 100 |

### Examples 5,7 and 9 and Comparative Examples 1,2,6 and 8: Preparation of center-filled coated chewing gum

A center-filled coated chewing gum was prepared by using a predetermined amount of ingredients as shown in Table 4. A gum base was prepared by mixing a gum base material, xylitol, a flavor and an emulsifying agent for 30 minutes at 50 °C. The gum base was passed through an extruder, while continuously hoppering size-controlled granules for a center layer into the center of the gum base through a hopper. At the same time, the gum base containing the granules was passed through a mold, thereby maintaining the shape of a center-filled chewing gum.

Liquid nitrogen (-196 °C) was used to prevent the adhesion of the gum base containing granules to the mold. The gum base containing granules (42 kg) was placed in a pan under the conditions of 20 °C and 50% RH for the coating process, and the coating process was repeated 24 times. The coated gum was treated with a coating agent for improving the surface gloss.

**[Table 4]**

| | | Content (wt%) | | | | | | |
|---|---|---|---|---|---|---|---|---|
| | | Ex.5 | Comparative example Ex.6 | Ex.7 | Comparative example Ex.8 | Ex.9 | Comp. Ex.1 | Comp. Ex.2 |
| Gum base layer | Specimen 1 | 66.7 | - | - | - | 66.37 | 66.7 | 66.7 |
| | Specimen 2 | - | 6.7 | - | - | - | - | - |
| | Specimen 3 | - | - | 66.7 | - | - | - | - |
| | Specimen 4 | - | - | - | 66.7 | - | - | - |
| Center layer | Specimen 8 | - | - | 13.3 | - | - | 16.7 | - |
| | Specimen 9 | - | 16.7 | - | - | - | - | - |
| | Specimen 10 | 16.7 | - | - | - | - | - | - |
| | Specimen 11 | - | - | - | 16.7 | - | - | - |
| | Specimen 12 | - | - | - | - | 16.7 | - | 16.7 |
| Coating layer | Specimen 13 | 16.7 | - | - | - | 16.7 | 16.7 | 16.7 |
| | Specimen 14 | - | 16.7 | - | - | - | - | - |
| | Specimen 15 | - | - | 20 | - | - | - | - |
| | Specimen 16 | - | - | - | 16.7 | - | - | - |
| Total | | 100 | 100 | 100 | 100 | 100 | 100 | 100 |

### Comparative Example 4: Preparation of uncoated powder-phase center-filled chewing gum

A gum base was prepared by mixing a gum base material, xylitol, a flavor and an emulsifying agent for 30 minutes at 50 °C. An uncoated powder-phase center-filled chewing gum containing 18 wt% of powders of xylitol and erythritol was prepared by passing the gum base through an extruder, while continuously hoppering xylitol powders and erythritol powders into the center of the gum base through a hopper. At the same time, the gum base was passed through a mold, thereby maintaining the shape of a center-filled chewing gum. Liquid nitrogen (-196 °C) was used to prevent the adhesion of the gum base to the mold.

### Experimental Example

Sensory tests about each item below were conducted by 20 panels by using the chewing gums prepared in Examples 5,7 and 9 and Comparative Examples 1-4 and 6-8 and the results are presented in Table 5.

**[Table 5]**

| | Examples | | | | | Comparative Examples | | |
|---|---|---|---|---|---|---|---|---|
| | 5 | 6 Comparative example | 7 | 8 Comparative example | 9 | 1 | 2 | 4 |
| Touch inside mouth¹⁾ | 5 | 5 | 5 | 4 | 5 | 5 | 5 | 5 |
| Feeling of refreshment²⁾ | 5 | 3 | 3 | 2 | 2 | 3 | 3 | 3 |
| Bitter taste²⁾ | 1 | 3 | 3 | 2 | 2 | 3 | 4 | 3 |
| Feeling of crunch²⁾ | 3 | 3 | 4 | 3 | 3 | 3 | 3 | 1 |
| Preference¹⁾ | 5 | 4 | 3 | 2 | 3 | 3 | 2 | 3 |
| 1) Touch inside mouth and preference 5: Very good,4: Good , 3 Average 2: Bad, 1 : Very bad | | | | | | | | |
| 2) Feeling of refreshment, bitter taste and feeling of crunch 5: Very strong, 4: Strong, 3: Average, 2: Weak, 1: Very weak | | | | | | | | |

As shown in Table 5, the chewing gums, which are prepared in Examples 5, 7 and 9 by filling the center with the granules with a diameter of 980µm-2460µm(8-18 mesh) in the center prepared in Preparatory Examples 8, 10 and 12 show remarkably superior sensory characteristics.

Further, although it is not shown in the tables, chewing gums prepared in Examples 5-9 showed no sinking of the ingredients filled in the center layer into the gum base layer, which is achieved by limiting the water content in the center layer to less than 1.0% and controlling the size of granules within 980µm-1900µm (10-18 mesh).

### [Industrial applicability]

The present invention relates to a center-filled coated chewing gum giving a feeling of refreshment and a preparation method thereof. As described above, the present invention provides a chewing gum giving both a feeling of refreshment and a feeling of crunch.

## Claims

1. A center-filled coated chewing gum comprising (i) a center layer filled with granules with a diameter of 980µm-1900µm (10-18 mesh) comprising 60-99 wt% of xylitol, 0-5.0 wt% of a cooling agent selected from monomenthyl succinate, 1-menthyllactate and menthol carboxamide, 0.1-25 wt% of water, 0-5.0 wt% of menthol and 0-5.0 wt% of a flavor, (ii) a gum base layer surrounding the center layer, and (iii) a coating layer surrounding an outer surface of the gum base layer comprising 60-95 wt% of xylitol, 0.1-5.0 wt% of a binding agent, 1.0-30 wt% of water and 0.1-5.0 wt% of a flavour.

2. The chewing gum of claim 1, which comprises (i) 5.0-30.0 wt% of the center layer, (ii) 30.0-80.0 wt% of the gum base layer, and (iii) 10.0-40.0 wt% of a coating layer.

3. The chewing gum of claim 2, wherein the gum base layer comprises 15-50 wt% of a gum base, 45-80 wt% of a sugar alcohol and a sweetener and 0.1-5.0 wt% of a flavour.

4. The chewing gum of claim 3, wherein the sugar alcohol is selected from the group consisting of xylitol, maltitol, sorbitol, erythritol, isomalt, lactitol, mannitol and a mixture thereof.

5. The chewing gum of claim 3, wherein the sweetener is selected from the group consisting of sugar, glucose, starch syrup and a mixture thereof.

6. A process of preparing a center-filled coated chewing gum, which comprises:
(a) obtaining a mixture by mixing a gum base layer composition comprising a gum base, a sweetener and a sugar alcohol in a mixer pre-heated at 45-55 °C, adding a flavour in the composition and further mixing a mixture comprising the composition and the flavour;
(b) obtaining a molded gum by extruding the mixture with an extruder, hoppering granule-phase composition comprising 60-99 wt% of xylitol, 0-5.0 wt% of a cooling agent selected from monomenthyl succinate, 1-menthyllactate and menthol carboxamide, 0.1-25 wt% of water, 0-5.0 wt% of menthol and 0-5.0 wt% of a flavor, the granules having a diameter of 980µm-1900µm (10-18 mesh), through a hopper with a screw, whereby enabling the filling of the center and the molding; and
(c) coating the molded gum with a coating layer composition comprising 60-95 wt% of xylitol, 0.1-5.0 wt% of a binding agent, 1.0-30 wt% of water and 0.1-5.0 wt% of a flavor under the conditions of 18-25 °C and 40-50% RH, followed by aging.

## Patentansprüche

1. Mittig gefüllter, überzogener Kaugummi, umfassend (i) eine mittlere Schicht, gefüllt mit Granulatkörnern mit einem Durchmesser von 980 µm-1900 µm (10-18 Mesh), umfassend 60-99 Gew.-% Xylitol, 0-5,0 Gew.-% eines kühlenden Mittels, ausgewählt aus Monomenthylsuccinat, 1-Menthyllactat und Mentholcarboxamid, 0,1-25 Gew.-% Wasser, 0-5,0 Gew.-% Menthol und 0-5,0 Gew.-% eines Aromas, (ii) eine Gummigrundlagenschicht, die die mittlere Schicht umgibt, und (iii) eine Überzugsschicht, die eine Außenoberfläche der Gummigrundlagenschicht umgibt, umfassend 60-95 Gew.-% Xylitol, 0,1-5,0 Gew.-% eines Bindemittels, 1,0-30 Gew.-% Wasser und 0,1-5,0 Gew.-% eines Aromas.

2. Kaugummi gemäß Anspruch 1, umfassend (i) 5,0-30,0 Gew.-% der mittleren Schicht, (ii) 30,0-80,0 Gew.-% der Gummigrundlagenschicht und (iii) 10,0 bis 40,0 Gew.-% einer Überzugsschicht.

3. Kaugummi gemäß Anspruch 2, wobei die Gummigrundlagenschicht 15-50 Gew.-% einer Gummigrundlage, 45-80 Gew.-% eines Zuckeralkohols und eines Süßstoffs und 0,1-5,0 Gew.-% eines Aromas umfasst.

4. Kaugummi gemäß Anspruch 3, wobei der Zuckeralkohol ausgewählt ist aus der Gruppe bestehend aus Xylitol, Maltitol, Sorbitol, Erythritol, Isomalt, Lactitol, Mannitol und einem Gemisch davon.

5. Kaugummi gemäß Anspruch 3, wobei der Süßstoff ausgewählt ist aus der Gruppe bestehend aus Zucker, Glucose, Stärkesirup und einem Gemisch davon.

6. Verfahren zum Herstellen eines mittig gefüllten, überzogenen Kaugummis, umfassend:
(a) Erhalten eines Gemischs durch Mischen einer Gummigrundlagenschicht-Zusammensetzung, umfassend eine Gummigrundlage, einen Süßstoff und einen Zuckeralkohol in einem auf 45-55 °C vorgewärmten Mischer, Zugeben eines Aromas zu der Zusammensetzung und Weitermischen des Gemischs, das die Zusammensetzung und das Aroma umfasst;
(b) Erhalten eines geformten Gummis durch Extrudieren des Gemischs mittels eines Extruders, Einfüllen einer Zusammensetzung mit Granulatphase, umfassend 60-99 Gew.-% Xylitol, 0-5,0 Gew.-% eines kühlenden Mittels, ausgewählt aus Monomenthylsuccinat, 1-Menthyllactat und Mentholcarboxamid, 0,1-25 Gew.-% Wasser, 0-5,0 Gew.-% Menthol und 0-5,0 Gew.-% eines Aromas, wobei die Granulatkörner einen Durchmesser von 980 µm-1900 µm (10-18 Mesh) aufweisen, durch einen Fülltrichter mit einer Schraube, wodurch das Füllen der Mitte und das Formen ermöglicht wird; und
(c) Überziehen des geformten Gummis mit einer Überzugsschichtzusammensetzung, umfassend 60-95 Gew.-% Xylitol, 0,1-5,0 Gew.-% eines Bindemittels, 1,0-30 Gew.-% Wasser und 0,1-5,0 Gew.-% eines Aromas, unter den Bedingungen von 18-25 °C und 40-50 % RH, gefolgt von Alterung.

## Revendications

1. Chewing-gum enrobé à fourrure centrale comprenant (i) une couche centrale remplie de granulés ayant un diamètre de 980 µm-1900 µm (10-18 mesh) comprenant 60-99% en poids de xylitol, 0-5,0% en poids d'un agent rafraichissant choisi parmi le succinate de monomenthyle, le lactate de 1-menthyle et le menthol carboxamide, 0,1-25% en poids d'eau, 0-5,0% en poids de menthol et 0-5,0% en poids d'un arôme, (ii) une couche de base de gomme entourant la couche centrale, et (iii) une couche d'enrobage entourant une surface externe de la couche de base de gomme comprenant 60-95% en poids de xylitol, 0,1-5,0% en poids d'un agent liant, 1,0-30% en poids d'eau et 0,1-5,0% en poids d'un arôme.

2. Chewing-gum selon la revendication 1, comprenant (i) 5,0-30,0% en poids de la couche centrale, (ii) 30,0-80,0% en poids de la couche de base de gomme, et (iii) 10,0-40,0% en poids d'une couche d'enrobage.

3. Chewing-gum selon la revendication 2, **caractérisé en ce que** la couche de base de gomme comprend 15-50% en poids d'une base de gomme, 45-80% en poids d'un alcool de sucre et d'un édulcorant et 0,1-5,0% en poids d'un arôme.

4. Chewing-gum selon la revendication 3, **caractérisé en ce que** l'alcool de sucre est choisi dans le groupe constitué par le xylitol, le maltitol, le sorbitol, l'érythritol, l'isomalt, le lactitol, le mannitol, et un mélange de ceux-ci.

5. Chewing-gum selon la revendication 3, **caractérisé en ce que** l'édulcorant est choisi dans le groupe constitué par le sucre, le glucose, le sirop d'amidon et un mélange de ceux-ci.

6. Procédé de fabrication d'un chewing-gum enrobé à fourrure centrale, comprenant :
(a) l'obtention d'un mélange par le mélange d'une composition de couche de base de gomme comprenant une base de gomme, un édulcorant et un alcool de sucre dans un mélangeur préchauffé à 45-55°C, l'addition d'un arôme dans la composition et le mélange supplémentaire du mélange comprenant la composition et l'arôme ;
(b) l'obtention d'une gomme moulée par l'extrusion du mélange dans une extrudeuse, en traitant une composition de phase de granulés comprenant 60-99% en poids de xylitol, 0-5,0% en poids d'un agent rafraichissant choisi parmi le succinate de monomenthyle, le lactate de 1-menthyle et le menthol carboxamide, 0,1-25% en poids d'eau, 0-5,0% en poids de menthol et 0-5,0% en poids d'un arôme, les granulés ayant un diamètre de 980 µm-1900 µm (10-18 mesh), dans une trémie pourvue d'une vis, permettant ainsi le remplissage du centre et le moulage ; et
(c) l'enrobage de la gomme moulée par une composition de couche d'enrobage comprenant 60-95% en poids de xylitol, 0,1-5,0% en poids d'un agent liant, 1,0-30% en poids d'eau et 0,1-5,0% en poids d'un arôme dans des conditions de 18-25°C et 40-50% d'humidité relative, suivi d'une maturation.
